# DEMANDE DE BREVET EUROPEEN

(11) **EP 1 621 523 A1**
(43) Date de publication de la demande: **01.02.2006**
(21) Numéro de dépôt: 05300631.8
(22) Date de dépôt: 29.07.2005
(51) Int. Cl.: C02F 11/12, F26B 19/00, F26B 3/28, F26B 23/00

(54) **Procédé de séchage combiné de déchets, notamment de boues de stations d'épuration**

(30) Priorité: 30.07.2004 FR 0451751
(71) Demandeur: SOCIETE D'AMENAGEMENT URBAIN ET RURAL, 78280 Guyancourt (FR)
(72) Inventeur: Ventura, Alexandre, 33610 Cestas (FR); Gresle, Anne, 78180 Montigny le Bretonneux (FR); Clodic, Denis, 75006 Paris (FR)
(74) Mandataire: Grynwald, Albert

(57) **Abrégé**

La présente invention concerne un procédé de séchage combiné de boues ou déchets, utilisant de manière couplée et régulée des énergies renouvelables issues du rayonnement solaire, de l'eau traitée issue d'une station d'épuration d'effluents urbains ou industriels, et de l'air relativement plus chaud et humide que l'air ambiant extrait d'une serre comprenant les étapes suivantes :
- récupérer des calories solaires au moyen de la serre,
- récupérer des calories de l'air de balayage extrait de la serre et chargé en humidité au moyen d'un échangeur air/liquide,
- récupérer des calories contenues dans l'eau traitée issue de la station d'épuration, soit via un échangeur eau/liquide, soit directement, après filtrage de cette eau.
- utiliser les calories ainsi récupérées pour produire un liquide chaud,
- utiliser le liquide chaud ainsi produit pour chauffer la boue de la serre.

## Description

L'invention est relative à un procédé de séchage combiné de déchets, notamment de boues de stations d'épuration.

Le séchage de déchets, et en particulier de boues de stations d'épuration, est une étape souvent indispensable pour faciliter la gestion ultérieure des déchets que ceux-ci soient ultérieurement valorisés ou tout simplement stockés. Cette étape de traitement entraine en général une dépense énergétique importante induite par l'apport en calories nécessaire à l'évaporation de l'eau.

Pour réaliser un séchage à moindre coût, le séchage solaire est une solution, en particulier dans les zones à fort ensoleillement. Ce procédé s'est montré efficace et simple à mettre en oeuvre mais très extensif : les surfaces nécessaires sont importantes et conduisent à des difficultés, voire à des impossibilités d'implantation, surtout en zone urbaine, ainsi qu'à des coûts d'ouvrage (génie civil et serre notamment) parfois prohibitifs. Ainsi, on estime aujourd'hui que le séchage solaire est une solution réaliste jusqu'à des stations d'épuration d'environ 20.000 EqH (équivalents habitants).

Un balayage d'air, par convection naturelle ou forcée, est nécessaire dans la serre pour évacuer la vapeur d'eau issue de la boue. Dans les installations connues actuellement, cet air, pouvant être de l'air ambiant ou de l'air préalablement déshumidifié, est évacué ensuite vers l'extérieur alors qu'il contient un potentiel énergétique important. Néanmoins, la mise en oeuvre de moyens de récupération d'énergie ne peut être efficace que si la problématique de corrosion est bien maîtrisée et les parois des éléments de transfert de fluides thermiques correctement calorifugées.

Afin de permettre les opérations de manutention de la boue (chargement/déchargement/retournement), les serres utilisées pour le séchage solaire sont des serres hautes, classiquement de 4m à 5 m, qui permettent le passage des engins mécaniques, automatisés ou non, utilisés. Cette configuration d'installation conduit à une stratification importante de l'air défavorable au rendement énergétique de l'ensemble et oblige à mettre en place des systèmes de ventilation complémentaires pour assurer la déstratification thermique.

L'association d'autres énergies renouvelables, telles que l'énergie éolienne, a été envisagée pour renforcer l'apport calorique dans la boue, en complément de l'énergie solaire. Cette solution technique présente une amélioration du séchage solaire mais n'en reste pas moins une solution dépendante des conditions climatiques de la zone d'implantation considérée et suppose une répartition optimale des calories dans le système (air et/ou boues) ainsi qu'un système de régulation qui ne sont pas décrits dans l'état de l'art. Il est à noter que les caractéristiques thermiques de la boue varient fortement au cours du séchage, ce qui implique une analyse fine de ses modes de chauffage pour optimiser l'efficacité du système, analyse qui n'a pas été réalisée dans les travaux scientifiques existants.

De plus, dans le cas des boues de station d'épuration, l'hygiénisation est un enjeu important pour faciliter la valorisation ultérieure des boues séchées qui n'est pas pris en compte aujourd'hui dans la conception des serres de séchage solaire. Les températures de boues atteintes ainsi que l'aération de la boue doivent être suffisantes pour tuer les pathogènes de type bactéries (salmonelles ou coliformes), virus et les parasites (oeufs d'helminthes,...). A noter que cette hygiénisation est obtenue lors d'une étape de compostage ou au séchage thermique haute température. L'hygiénisation peut cependant être obtenue à plus basse température mais durant un temps de chauffage plus important (par exemple 1 mois à 50 °C).

Enfin, une des limites du séchage solaire conventionnel réside dans le fait que les boues doivent être préalablement déshydratées pour atteindre des siccités de l'ordre de 12 à 20%. Or, dans les cas des petites stations d'épuration, le gisement de boues n'est pas suffisant pour qu'une étape de déshydratation puisse être mise en oeuvre (problème économique) ce qui limite l'utilisation ultérieure d'un séchage solaire sous serre aux stations de plus de 5000 EqH.

Pour remédier à ces différents problèmes techniques et améliorer l'efficacité énergétique du séchage sous serre, la présente invention consiste en un procédé de séchage basse température qui utilise l'énergie solaire mais qui peut utiliser, en variante ou en complément d'autres énergies renouvelables telles que :
- les calories disponibles dans l'eau traitée par la station d'épuration et rejetées normalement dans l'environnement (cours d'eau récepteurs), et/ou
- les calories issues de l'évaporation de l'eau contenues dans l'air de balayage de la serre.
- l'exothermicité des réactions biologiques ayant lieu dans la boue, et/ou
- les calories issues de capteurs enterrés dans le sol récupérant l'énergie géothermique,

La présente invention concerne un procédé de séchage combiné de boues ou déchets, utilisant de manière couplée et régulée des énergies renouvelables issues du rayonnement solaire, de l'eau traitée issue d'une station d'épuration d'effluents urbains ou industriels, et de l'air relativement plus chaud et humide que l'air ambiant extrait d'une serre comprenant les étapes suivantes :
- récupérer des calories solaires au moyen de la serre,
- récupérer des calories de l'air de balayage extrait de la serre et chargé en humidité au moyen d'un échangeur air/liquide,
- récupérer des calories contenues dans l'eau traitée issue de la station d'épuration, soit via un échangeur eau/liquide, soit directement, après filtrage de cette eau.
- utiliser les calories ainsi récupérées pour produire un liquide chaud,
- utiliser le liquide chaud ainsi produit pour chauffer la boue de la serre.

Dans une réalisation, le chauffage de la boue de la serre s'effectue à l'aide d'un échangeur à liquide utilisant ledit liquide chaud, et qui est inséré dans une dalle de la serre.

Dans une réalisation, une pompe à chaleur permet de fournir du liquide chaud à l'échangeur à liquide, en utilisant les calories de l'eau traitée, récupérées directement ou via l'échangeur eau/liquide.

Dans une réalisation, on régule les calories introduites dans l'échangeur à liquide en fonction de la température des déchets.

Dans une réalisation, ledit liquide chaud est utilisée dans un échangeur liquide/air pour préchauffer l'air entrant dans la serre.

Dans une réalisation, on préchauffe l'air entrant lorsque l'hygrométrie relative de l'air extrait de la serre au débit de ventilation maximal atteint une valeur limite, et on régule le préchauffage de l'air entrant dans la serre en fonction de la température d'air entrant dans la serre.

Dans une réalisation, une pompe à chaleur permet de préchauffer l'air entrant dans la serre en utilisant les calories récupérées dans l'air extrait de la serre par l'échangeur air/liquide.

Dans une réalisation, on produit du liquide chaud au moyen d'une même pompe à chaleur, à partir des calories récupérées au niveau de l'échangeur air/liquide, et des calories récupérées dans l'eau traitée, soit directement, soit via l'échangeur eau/liquide.

Dans une réalisation, le procédé comporte une étape de recirculation de l'air de balayage extrait de la serre.

Dans une réalisation, on déshumidifie l'air extrait de la serre, l'air déshumidifié étant réintroduit dans la serre avec un apport d'air extérieur en fonction de l'hygrométrie relative de l'air entrant dans la serre (20).

Dans une réalisation, le procédé comprend une étape de récupération des calories issues de réactions biologiques par mélange des déchets à sécher avec une fraction de déchets secs.

Dans une réalisation, le procédé comprend une étape de récupération de l'énergie géothermique, par le biais de capteurs enterrés dans le sol.

Dans une réalisation, on régule le débit d'air de balayage en fonction de l'hygrométrie et de la température de l'air extrait de la serre.

Dans une réalisation, l'air de balayage extrait de la serre circule à travers un dispositif de lavage de l'air avant d'être réintroduit dans la serre.

Dans une réalisation, le dispositif de lavage met en contact l'air de balayage et une solution de lavage liquide, notamment une solution aqueuse, permettant aux gaz polluants de se dissoudre dans la solution de lavage.

Dans une réalisation, la solution de lavage, après passage dans le dispositif de lavage, circule au travers d'un échangeur liquide/liquide pour en récupérer des calories avant d'être réintroduite en totalité ou en partie dans le dispositif de lavage.

Dans une réalisation, la boue de la serre est contenue entre deux murets parallèles, chacun des deux murets comportant des fenêtres de ventilation situées au dessus du niveau de la boue, et permettant d'assurer sur un des murets l'introduction de l'air de balayage, et sur le muret opposé l'extraction de cet air.

Dans une réalisation, les fenêtres sont disposées de manière à ce qu'aucune fenêtre ne soit en regard d'une autre, pour assurer une répartition optimale de l'air de balayage.

Dans une réalisation, on utilise comme air de balayage de la serre l'air chaud provenant du refroidissement du local de surpression de la station d'épuration, en totalité ou en complément de l'air ambiant ou de l'air extrait de la serre préchauffé.

L'invention concerne également une installation de séchage combiné comportant :
- une dalle, notamment drainante, sur laquelle sont épandus des boues ou déchets à sécher,
- une serre,
- des moyens aérauliques permettant l'introduction et l'extraction de l'air sous la serre de manière à évacuer la vapeur d'eau, à apporter des calories complémentaires et à éviter la stratification thermique sans ajout de moyens mécaniques dédiés,
- un échangeur air/liquide pour récupérer des calories de l'air de balayage extrait de la serre,
- des moyens pour récupérer des calories contenues dans l'eau traitée issue d'une station d'épuration, soit directement après un filtrage, soit via un échangeur eau/liquide, et
- au moins une pompe à chaleur permettant de transférer les calories récupérées vers la serre.

Dans une réalisation, cette installation comporte une pompe à chaleur permettant de préchauffer l'air entrant dans la serre au moyen des calories récupérées par l'échangeur air/liquide, la pompe à chaleur transférant ces calories vers un échangeur air/liquide.

Dans une réalisation, cette installation comporte une pompe à chaleur permettant de transférer les calories récupérées dans l'eau traitée, soit directement, soit via l'échangeur eau/liquide vers les déchets au moyen d'un échangeur à liquide inséré sous la dalle de la serre.

Dans une réalisation, une même pompe à chaleur transfère les calories récupérées au niveau de l'échangeur air/liquide et dans l'eau traitée, d'une part vers la serre au moyen d'un échangeur à liquide inséré dans la dalle de la serre, et d'autre part vers un échangeur air/liquide pour préchauffer l'air entrant dans la serre.

Dans une réalisation, cette installation comporte un outil automatisé de retournement de la boue destiné à assurer les fonctions de retournement, avancement, aération et structuration des déchets.

Dans une réalisation, l'outil automatisé de retournement de la boue est tel que son déplacement est longitudinal en aller retour sur une dalle, en ce qu'il est monté sur quatre roues, en ce qu'il comporte un rotor relevable à palettes muni d'un système mécanique à vérin d'immersion dans les déchets, destiné à assurer:
- un retournement des déchets,
- une aération des déchets,
- un avancement des déchets,
- une structuration des déchets.

Dans une réalisation, cette installation comporte un système de chargement et de déchargement automatique de la boue.

Dans une réalisation, cette installation comporte une unité de traitement des odeurs.

Dans une réalisation, la serre est une serre basse à plafond télescopique.

Dans une réalisation, cette installation comporte un dispositif de lavage de l'air de balayage extrait de la serre, l'air de balayage circulant à travers ce dispositif avant d'être réintroduit dans la serre.

Dans une réalisation, le dispositif de lavage met en contact l'air de balayage et une solution de lavage liquide, notamment une solution aqueuse, permettant aux gaz polluants de se dissoudre dans la solution de lavage.

Dans une réalisation, la solution de lavage est recyclée à vers le dispositif de lavage, l'installation étant pourvue d'un échangeur liquide/liquide pour récupérer des calories de la solution de lavage avant que celle-ci soit réintroduite, en totalité ou en partie, dans le dispositif de lavage.

Dans une réalisation, la boue de la serre est contenue entre deux murets parallèles, chacun des deux murets comportant des fenêtres de ventilation situées au dessus du niveau de la boue, et permettant d'assurer sur un des murets l'introduction de l'air de balayage, et sur le muret opposé l'extraction de cet air.

Dans une réalisation, les fenêtres sont disposées de manière à ce qu'aucune fenêtre ne soit en regard d'une autre, pour assurer une répartition optimale de l'air de balayage.

Dans une réalisation, on utilise comme air de balayage de la serre l'air chaud provenant du refroidissement du local de surpression de la station d'épuration, en totalité ou en complément de l'air ambiant ou de l'air extrait de la serre préchauffé.

D'autres caractéristiques et avantages de l'invention apparaîtront avec la description faite ci-dessous, cette dernière étant effectuée à titre d'exemple non limitatif en faisant référence aux figures ci-après sur lesquelles :
- la figure 1 est une vue en coupe d'une serre et de l'installation mettant en oeuvre le procédé selon l'invention,
- la figure 2 est une vue en coupe d'une serre équipée d'un outil de retournement,
- la figure 3 représente une serre vue de dessus,
- la figure 4, représente un dispositif de lavage de l'air de balayage,
- la figure 5 est une vue de dessus d'une serre permettant une ventilation transversale des déchets,
- la figure 6 montre un schéma du circuit d'air équipé d'une pompe à chaleur dédiée,
- la figure 7 montre un schéma du circuit d'eau équipé d'une pompe à chaleur dédiée.

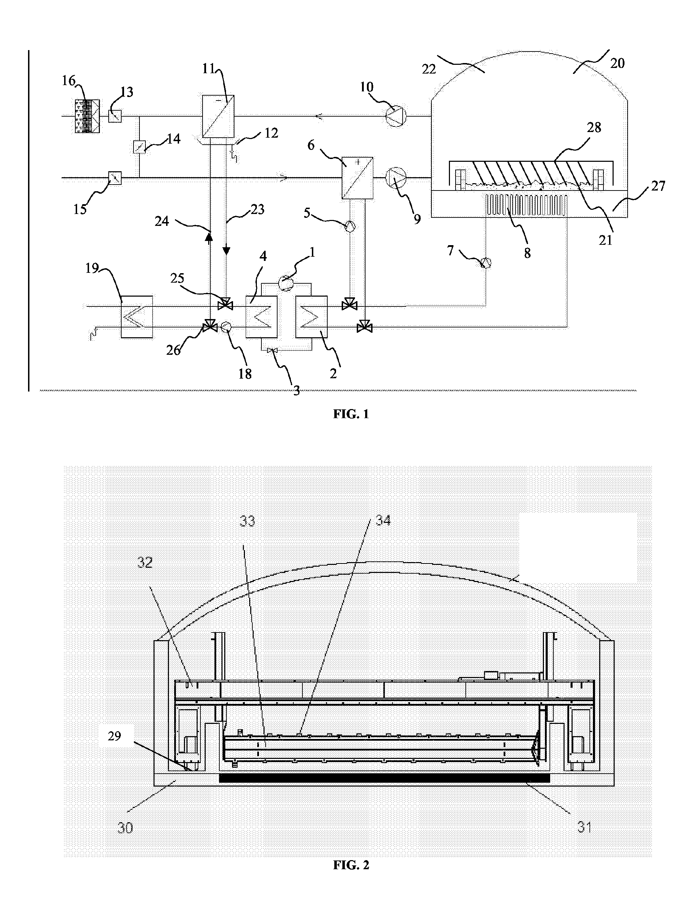

La figure 1 montre une vue en coupe d'une serre 20 dont le plafond 22 est un plafond télescopique permettant un chargement aisé des boues 21 dans la serre. Les boues sont brassées par un outil de retournement automatisé 28 disposé sous la serre. Lorsque le flux solaire est insuffisant, une pompe à chaleur composée d'un compresseur 1, d'un condenseur fluide frigorigène / eau 2, d'un organe de détente 3 et d'un évaporateur eau /frigorigène 4 permet de puiser de la chaleur sur deux sources froides soit en même temps, soit alternativement.

La première source froide est l'eau rejetée par une station d'épuration proche. La chaleur est puisée par l'échangeur eau /eau 19 qui est mis en rapport avec l'évaporateur 4 via la pompe 18. L'autre source froide est l'air extrait de la serre.

La chaleur est puisée par l'échangeur air / eau 11 qui est connecté aussi à l'évaporateur 4 via un circuit composé des lignes 23 et 24 et de la pompe 18. Des vannes trois voies 25 et 26 permettent de passer facilement de l'échangeur 19 à un échangeur 11. Il est même possible de fonctionner sur les deux échangeurs en parallèle. Cette énergie puisée sur ces sources froides est remontée en température par la pompe à chaleur pour chauffer soit la dalle 27 de la serre 20 par un échangeur 8, soit l'air entrant dans la serre par un échangeur eau / air 6, soit les deux.

L'échangeur à eau 8 est constitué d'un circuit de tubes constitués avantageusement en matériau plastique, ces tubes étant insérés dans le béton selon un motif permettant de chauffer de manière homogène la dalle.

La pompe à chaleur permet donc de transférer de la chaleur d'un niveau typique de 8 à 15 °C pour l'eau de la station d'épuration jusqu'à une température typique entre 50 et 60 °C pour l'eau chauffée circulant dans les échangeurs 6 et 8.

La chaleur peut être aussi puisée à un niveau de température plus variable et plus élevée, typiquement entre 20 et 30 °C sur l'échangeur de récupération 11.

L'air est avantageusement mis en circulation à la fois par un ventilateur de soufflage 9 et un ventilateur d'extraction 10. Un ensemble de registres 13, 14, 15 permet aussi de faire recirculer de l'air extrait ce qui a l'avantage, selon les conditions climatiques, d'une part, de réutiliser les calories encore disponibles sur l'air extrait et, surtout, d'utiliser un air déshumidifié sur l'échangeur 11 puisque cet échangeur peut, dans de nombreux cas, avoir une température de surface inférieure à la température de rosée de l'air chaud et humide sortant de la serre. Les condensats sont d'ailleurs récupérés dans un dispositif de récupération 12, ces condensats pouvant, de plus, être traités selon la dilution des différents gaz contenus dans l'air extrait de la serre. Enfin il est possible de mettre en place sur l'air rejeté un ensemble de filtres 16 ou un traitement des odeurs basé sur des réactions biologiques pour limiter la diffusion d'éléments odorants.

Le dispositif ainsi décrit permet donc plusieurs stratégies pour accroître l'efficacité de séchage des boues en fonction du flux solaire et en fonction de l'hygrométrie de l'air. Par exemple, la nuit en demi-saison, mais avec un air relativement sec, il est avantageux de chauffer par la dalle de la serre 27 au moyen de l'échangeur 8. Si l'air extrait est à une température significativement plus élevée que l'air ambiant, il est aussi avantageux de le déshumidifier sur l'échangeur 11 et d'en réinjecter une partie au moyen du réglage des registres 13, 14, 15. L'air peut alors être réchauffé par l'échangeur 6. Dans ce cas, le séchage est bifacial par de l'air relativement chaud et sec en surface et par la dalle de la serre. Par contre, lorsque le flux solaire a été relativement important pendant la journée, la boue a pu monter en température de manière significative et il n'est pas alors utile de chauffer la boue par la dalle. Par contre, il peut être tout à fait adéquat de récupérer la chaleur sur l'air extrait par l'échangeur 11 et le déshumidifier. Dans ce cas, le séchage est mono facial et convectif.

Compte tenu de la grande variabilité des besoins thermiques, puisque la régulation globale donne toujours la priorité au solaire, la pompe à chaleur est avantageusement dotée d'un système à puissance variable. Cette puissance peut être variée soit par un variateur de fréquence modifiant la vitesse de rotation du moteur électrique d'entraînement du (des) compresseur(s), soit par l'utilisation d'au moins deux compresseurs de puissances différentes permettant par exemple d'obtenir une régulation de puissance un tiers, deux tiers et trois tiers.

Le procédé de séchage selon la présente invention associe ainsi différents principes de récupération d'énergie renouvelables qui peuvent être utilisés ou non en parallèle suivant les besoins énergétiques et les conditions météorologiques principalement.

### 1. Récupération du rayonnement solaire.

Les déchets sont étalés sous une serre transparente 20 qui permet de récupérer directement l'énergie du rayonnement solaire pour assurer l'évaporation de l'eau et le séchage.

### 2. Récupération des calories issues l'eau de sortie de la station d'épuration.

L'eau de sortie d'une station d'épuration possède une température relativement stable comprise approximativement entre 8 et 15°C. Cette eau est disponible tous les jours de l'année et son débit est proportionnel à la charge de la station et donc à la production de boues.

Pour récupérer les calories de ce fluide, une partie du flux sortant de la station d'épuration est dirigée vers une batterie froide ou échangeur 19. Cet échangeur sert à réchauffer un fluide caloporteur, constitué d'eau glycolée par exemple, qui sert de source froide à la pompe à chaleur (côté évaporateur 4). L'échangeur 19 sert également de protection dans l'éventualité d'une eau de sortie de station d'épuration agressive ou colmatante. Dans le cas où l'eau en sortie de la station d'épuration est de très bonne qualité (eau issue d'un traitement membranaire par exemple avec très peu de matières en suspension), la batterie froide 19 n'est plus nécessaire et l'eau de sortie station est uniquement filtrée et alimente directement l'évaporateur 4.

### 3. Récupération des calories issues de capteurs enterrés

Une alternative à l'utilisation de l'eau de sortie de station d'épuration est d'utiliser la chaleur du sol : des capteurs dans lesquels circulent un fluide caloporteur sont enterrés dans le sol à faible profondeur sur une surface importante ou dans un puits géothermique à plus grande profondeur. Ce fluide constitue comme dans le cas précédent la source froide de l'évaporateur 4. Cette configuration peut s'avérer intéressante par exemple lorsque l'ensemble de séchage ne peut pas être implanté à proximité d'une station d'épuration.

### 4. Récupération des calories contenues dans l'air de balayage.

L'air de balayage circulant dans la serre 20 se réchauffe et se charge en humidité entre l'entrée et la sortie. Il est donc envisagé de récupérer cet air au niveau du système d'extraction en sortie de serre et de l'envoyer vers un échangeur eau/air 11, permettant l'échange de chaleur avec un fluide caloporteur, lui-même connecté à l'évaporateur 4 de l'ensemble pompe à chaleur. La chaleur récupérée est à la fois issue du refroidissement de l'air et de la condensation de certains gaz, en particulier la vapeur d'eau. Compte tenu de la nature des gaz présents dans l'air (NH3,...), les matériaux utilisés pour la batterie froide doivent résister à la corrosion, qu'elle provienne des gaz directement ou de leurs condensats. Ce système présente ainsi la double fonction de déshumidification et de récupération de calories.

### 5. Récupération des calories issues des réactions biologiques dans la boue.

La boue est un milieu constitué principalement d'eau et de micro-organismes (bactéries, espèces mycéliennes,...). Dans certaines conditions, l'activité de ces micro-organismes peut devenir importante et dégager de la chaleur. C'est en particulier le cas lorsqu'une aération suffisante de la boue est maintenue ce qui donne lieu à des phénomènes d'auto-compostage. Ces calories fournies par la biomasse sont alors générées in situ dans la boue 21 et participent alors directement à l'évaporation de la vapeur d'eau et au réchauffement de l'air de balayage.

Le procédé selon l'invention permet, en parallèle de la récupération d'énergies renouvelables, de réutiliser efficacement les calories ainsi obtenues pour optimiser le séchage. Côté condenseur, la PAC (pompe à chaleur) produit en effet un fluide chaud, avantageusement de l'eau de 40°C à 60°C, par exemple à 50°C. Ce fluide caloporteur est utilisé à deux niveaux dans le procédé :
Premier niveau: chauffage de la boue via l'échangeur à eau 8. L'eau chaude sortant du condenseur 2 alimente, via une pompe de circulation 7, un échangeur à eau disposé dans la dalle 27 sur laquelle sont étalées les boues 21. Cet échangeur 8 peut couvrir la totalité ou une partie seulement de la surface bétonnée. Les calories de l'eau sont alors transmises à la boue par conduction et les pertes vers le sol sont minimisées par l'utilisation éventuelle d'un isolant thermique.
Deuxième niveau: chauffage de la boue via l'échangeur air/eau 6. L'eau chaude produite par la PAC peut être envoyée vers l'échangeur air/eau 6 qui préchauffe l'air avant son introduction dans la serre, via le ventilateur de soufflage 9.
Cet air peut être, soit de l'air ambiant, soit de l'air déshumidifié issu de la batterie froide air/eau 11, soit encore un mélange des deux.

Les boues séchées peuvent être recyclées en partie et mélangées aux boues à sécher de manière à favoriser les mécanismes biologiques aérobies (auto-compostage) qui conduisent à un dégagement de chaleur in situ, favorable au séchage et à l'hygiénisation de la boue.

Le procédé de régulation, pour le séchage hybride solaire et pompe à chaleur, a pour but de réaliser un séchage efficace en privilégiant les calories solaires gratuites et en apportant des calories complémentaires quand cela est nécessaire. La régulation prend en compte la température de la boue, la température et l'hygrométrie de l'air extérieur, la température et l'hygrométrie de l'air extrait de la serre, la température et l'hygrométrie de l'air introduit dans la serre lorsque celui-ci est différent de l'air ambiant.

Avantageusement, la régulation de l'échangeur à eau 8 est basée sur la mesure de la température de boues. Lorsque la température des boues est inférieure à 20°C, ou encore plus avantageusement inférieure à 30°C, la pompe 7 est actionnée de manière à alimenter l'échangeur à eau 8 en eau chaude issue du condenseur 2 pour maintenir la température des boues à la température limite choisie, avantageusement 20°C et encore plus avantageusement 30°C.

Avantageusement, le débit d'air de balayage est réglé au moyen du ventilateur 9 et de l'extracteur 10 en fonction de l'hygrométrie relative de l'air extrait de la serre. Ce paramètre est pertinent puisqu'il indique le degré de saturation de l'air extrait. Le débit est ainsi régulé de manière à maintenir une hygrométrie relative de l'air extrait avantageusement comprise entre 80% et 95%, encore plus avantageusement comprise entre 90% et 95%. Lorsque le débit maximal de ventilation ne permet plus de maintenir l'humidité relative de l'air extérieur dans cette plage, l'air est préchauffé jusqu'à 20°C, encore plus avantageusement 30°C au moyen de l'échangeur air/eau 6. Le recyclage de l'air de balayage, total ou partiel, est avantageusement mis en service en parallèle de manière à récupérer les calories de l'air extrait et de limiter ainsi l'apport de calories pour le préchauffage au niveau de l'échangeur 6. Ce recyclage est rendu possible par la mise en service de la déshumidification de l'air extrait de la serre au moyen de l'échangeur 11. En fonction des conditions de température et d'hygrométrie de l'air extérieur, un apport d'air ambiant est maintenu au moyen du registre 15 afin de déconcentrer l'air de balayage en polluants organiques ou odorants. L'objectif est de maintenir l'humidité relative de l'air introduit dans la serre à une valeur inférieure à 60%, encore plus avantageusement inférieure à 50%. Le registre 13 est alors réglé de manière à évacuer le débit d'air équivalent à l'apport réalisé au niveau du registre 15. La source froide de la pompe à chaleur est avantageusement l'eau traitée sortant de la station d'épuration via l'échangeur eau/eau 19 lorsque l'échangeur 11 ne fonctionne pas. Lorsque de l'eau circule dans les lignes 23 et 24 pour assurer la déshumidification au niveau de l'échangeur 11, cette eau est utilisée comme source froide pour alimenter l'évaporateur 4 et l'eau de la station d'épuration est utilisée en complément, voire n'est plus utilisée.

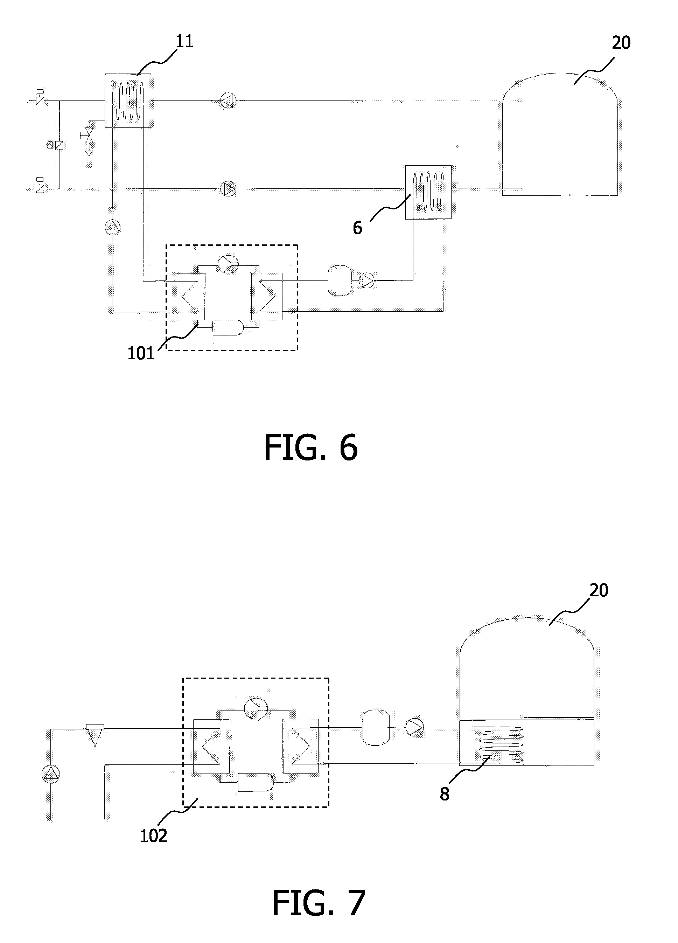

Dans une variante de l'invention visible sur les figures 6 et 7, on dispose de deux pompes à chaleur. Les calories récupérées de l'air de balayage extrait de la serre sont dirigées vers une première pompe à chaleur 101, qui transfère ces calories afin de préchauffer l'air entrant dans la serre au moyen de l'échangeur 6. Les calories récupérées de l'eau traitée issue de la station d'épuration sont dirigées vers une deuxième pompe à chaleur 102 qui transfère ces calories vers l'échangeur à eau 8 pour permettre le chauffage de la boue de la serre 20. Cette configuration permet de disposer de deux circuits séparés et indépendants, un circuit d'air et un circuit d'eau. L'indépendance de ces deux circuits permet une meilleure optimisation du procédé de séchage selon l'invention, car on peut n'utiliser qu'un seul des deux circuits, ou bien les deux mais dans des proportions variables. Ceci permet de faire fonctionner les pompes à chaleur dans un domaine proche de leur point de fonctionnement optimal et obtenir ainsi des performances énergétiques élevées (coefficient de performance avantageusement entre 4 et 6).

Dans une variante de l'invention, on peut récupérer l'air chaud provenant du circuit de refroidissement du local de surpression de la station d'épuration. En effet, le local de surpression assure la surpression nécessaire pour alimenter en air les bassins biologiques de la station d'épuration. La chaleur dégagée par la production de cet air surpressé nécessite un circuit de refroidissement par air. Il est donc intéressant de récupérer l'air chaud rejeté par ce circuit de refroidissement. Cet air chaud est introduit dans la serre, en complément de l'air ambiant ou de l'air extrait de la serre qui est déshumidifié et préchauffé.

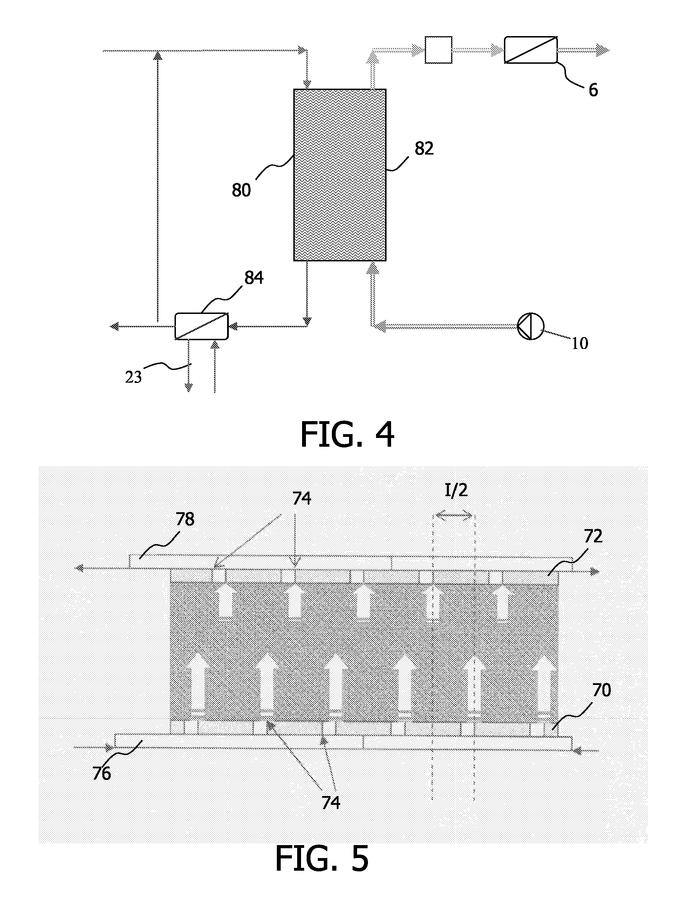

Dans une variante de l'invention, l'air de balayage extrait de la serre circule au travers d'un dispositif de lavage 80 (figure 4) de l'air avant d'être réintroduit dans la serre 20. En effet, l'air extrait de la serre 20 est chargé des gaz polluants tels que l'ammoniac qui peuvent avoir une action corrosive importante sur les éléments du circuit d'air, plus particulièrement sur les échangeurs qui comportent des parties métalliques.

Le dispositif de lavage 80 d'air est une colonne qui permet de mettre en contact une solution liquide de lavage avec l'air extrait de la serre. Dans ce but, la colonne est pourvue d'un garnissage 82 en matière plastique améliorant le contact entre les phases liquide et solide, et la circulation du gaz et du fluide se fait à contre-courant pour optimiser les échanges. Les gaz polluants contenus dans l'air se dissolvent alors dans la solution liquide de lavage. La solution de lavage sera choisie de manière à favoriser la dissolution des gaz polluants, en particulier de l'ammoniac.

Parallèlement à la dissolution des gaz, des échanges thermiques ont également lieu entre l'air de balayage extrait de la serre 20 et la solution de lavage. En effet l'air extrait de la serre est chaud et va donc réchauffer la solution de lavage en même temps qu'il se refroidit. De plus, la dissolution des gaz polluants dans la solution de lavage est un phénomène exothermique, qui contribue également au réchauffement de la solution de lavage. Il est alors intéressant de faire circuler la solution de lavage récupérée en sortie de la colonne au travers d'un échangeur liquide/liquide 84 pour récupérer les calories. Après passage dans cet échangeur, une fraction ou l'intégralité de la solution de lavage usagée peut être réutilisée dans le dispositif de lavage. Cette quantité vient en complément de la solution de lavage non usagée qui est introduite.

Le dispositif de lavage 80 de l'air assure donc deux fonctions : il dépollue et déshumidifie l'air extrait de la serre 20, et récupère les calories de cet air qui est chaud en sortie de serre, tout en réduisant significativement les risques de corrosion liés à la conjonction de trois facteurs : air chaud, humide et contenant de l'ammoniac en concentrations non négligeables.

Le procédé selon l'invention permet d'optimiser le balayage d'air de la serre. Il utilise pour cela des moyens de ventilation et d'extraction de l'air conçus de manière à limiter les phénomènes de stratification thermique et à optimiser la vitesse de balayage au voisinage de la boue.

Dans ce but, des murets 70,72, délimitant la zone sur laquelle est étalée la boue, sont percés de fenêtres 74 de ventilation situées au-dessus du niveau de la boue, comme visible sur la figure 5. Ces fenêtres 74 permettent d'assurer sur un des murets l'introduction de l'air de balayage, et sur le muret opposé l'extraction de cet air. Les fenêtres de ventilation sont disposées à intervalles réguliers, par exemple d'une cinquantaine de centimètres, sur chacun des murets de manière à ne pas être en regard les une des autres. Cette disposition assure une bonne répartition de l'air de balayage. Des gaines de soufflage d'air 76 sont connectées aux fenêtres servant à l'introduction de l'air de la serre, tandis que des gaines d'extraction d'air 78 sont connectées aux fenêtres servant à l'évacuation de l'air.

Les avantages des tels moyens de ventilation sont nombreux :
- La ventilation est, par rapport aux dimensions de la serre, transversale et non plus longitudinale, comme c'est le cas dans les serres connues. Le flux d'air est ainsi plus facile à contrôler, car il couvre une distance moindre.
- Le flux d'air circule au plus près du niveau de la boue, ce qui favorise les échanges thermiques et l'évaporation de l'eau tout en limitant la stratification thermique de l'air, et donc les pertes thermiques.
- Le flux d'air limite la dispersion des gaz polluants dans le volume de la serre, le flux d'air se comportant comme une barrière vis à vis des gaz issus du séchage de la boue.

Ce procédé est mis en oeuvre au moyen :
- D' une serre, avantageusement une serre basse 20 à plafond télescopique 22 qui offre un meilleur rendement énergétique grâce à son faible volume en position fermée et qui facilite et sécurise l'intervention du personnel (gaz toxiques) ou d'engins mécaniques en position repliée (faible risque d'endommagement de la structure).
- D'une dalle, avantageusement en béton, 27 pouvant être équipée d'un échangeur à eau 8, sur la totalité ou une partie seulement de sa surface, et complétée s'il y a lieu, d'une zone de drainage préalable de la boue, par exemple sur une structure poreuse drainante de type gravier + drains + sable. L'échangeur à eau 8 est constitué d'un circuit de tubes insérés dans la dalle, avantageusement de plusieurs circuits indépendants, connectés à un collecteur central, ce qui permet de chauffer uniquement la zone recherchée, en fonction par exemple du remplissage de la serre.
- D'un outil de retournement mécanique de la boue 32 totalement automatisé et de faible hauteur, qui assure à la fois le retournement, l'aération, la structuration et le déplacement de la boue en fonction des besoins du procédé. La conception de cet outil a été réalisée de manière à favoriser le séchage de la boue par l'obtention d'une texture favorable au transfert de vapeur d'eau. Cet outil est représenté sur la figure n°2. Il est monté sur quatre roues 29 et se déplace sur la dalle 30 dans un couloir de roulement latéral en aller-retour le long de la serre. Un rotor 33 muni de palettes 34, immergé dans la boue et relevable assure le retournement et l'aération de celle-ci. L'avancement de la boue est maîtrisé par la vitesse d'avancement de l'outil et la vitesse de rotation du rotor.
- Avec un moyen de ventilation 9 et/ou d'extraction 10 de l'air afin d'assurer un balayage d'air dans la serre. Des dispositifs complémentaires visant à maîtriser les écoulements d'air dans la serre (gaines d'injection, clapets,...) sont prévus afin de limiter le phénomène de stratification thermique et afin d'optimiser les vitesses d'air au voisinage de la boue. Une unité de traitement des odeurs 16 peut éventuellement être installée pour prévenir les nuisances olfactives.
- Avec une pompe à chaleur capable de transférer des calories d'un fluide froid vers un fluide chaud et avec des échangeurs complémentaires de type air/eau 6 et 11, ou eau/eau 19. Ces échangeurs pourront être de différents types et en différents matériaux. Par exemple, des matériaux plastiques peuvent être nécessaires pour résister à la corrosion, notamment en ce qui concerne l'air de balayage de la serre. L'étage de compression est avantageusement constitué de deux compresseurs différents de manière à gagner en souplesse de fonctionnement et à adapter le fonctionnement de la pompe à chaleur aux besoins énergétiques du système (fonctionnement un tiers, deux tiers, trois tiers).
- Avec un système de régulation et d'asservissement des différents organes du système : un ensemble de capteurs, leur centrale d'acquisition ainsi que les actionneurs et pré-actionneurs.

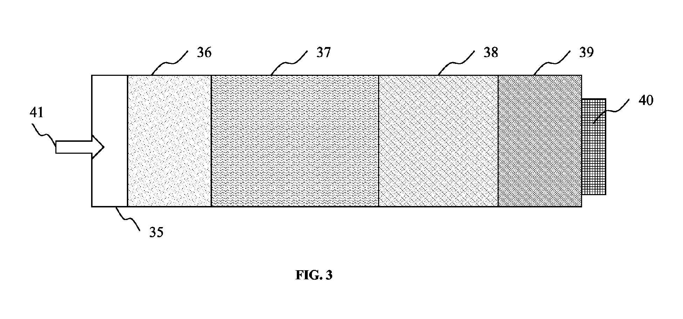

La serre est avantageusement constituée de différentes zones comme le montre la figure 3. La boue parcourt chacune de ces zones en fonction de son avancement.
- Une zone de chargement 35 de la boue située à une extrémité de la serre. La boue à sécher 41 peut être introduite soit par un moyen mécanique soit par une conduite d'alimentation reliée directement à l'amont de la filière de traitement.
- Une zone de drainage 36, si nécessaire en fonction de la siccité de la boue à sécher. Dans cette zone, la boue est déshydratée par l'effet de la gravité sur une structure de sol adaptée. Avant le chargement de la boue 41, l'ajout d'un polymère liquide capable de modifier l'état électrostatique des particules solides est souvent nécessaire pour obtenir une bonne efficacité de drainage.
- Une zone de séchage par le sol 37 où l'évaporation de l'eau est réalisée par l'effet conjugué de l'énergie solaire, de l'énergie transmise via le échangeur à eau 8 et l'air de balayage. Le séchage par le sol est particulièrement efficace tant que la boue est constituée principalement d'eau (avantageusement une siccité inférieure à 50%) .
- Une zone de finition 38 où la siccité visée est atteinte au moyen de l'énergie solaire et d'un balayage d'air. En effet, l'aspect de la boue devenant plus granuleux, le balayage d'air chaud devient plus efficace que le chauffage par le sol. Le balayage d'air peut être réalisé à travers la boue au moyen d'une dalle aéraulique ou au dessus de la boue par l'intermédiaire du système de ventilation de la serre.
- Une zone de stockage 39 de la boue si cela est nécessaire. L'objectif est alors de maintenir la boue à l'abri des intempéries pour éviter toute reprise d'humidité.
- Une zone d'évacuation 40 qui permet le transfert automatique de la boue séchée depuis la serre vers un stockage externe ou une benne d'évacuation. Un système de convoyeur peut permettre d'assurer cette opération en fin de séchage pour évacuer progressivement la boue sèche au fur et à mesure de sa production ou par bachée, en fin de période de séchage.
Dans un mode de conception et d'exploitation simplifié, la serre peut être utilisée en mode batch avec un remplissage en boue au fil des jours selon la production de la station d'épuration et avec un ou deux vidages par an selon. Les zones de séchage par le sol, de finition et de stockage sont alors confondues.

## Revendications

1. Procédé de séchage combiné de boues ou déchets, utilisant de manière couplée et régulée des énergies renouvelables issues du rayonnement solaire, de l'eau traitée issue d'une station d'épuration d'effluents urbains ou industriels, et de l'air relativement plus chaud et humide que l'air ambiant extrait d'une serre (20) comprenant les étapes suivantes :
- récupérer des calories solaires au moyen de la serre (20),
- récupérer des calories de l'air de balayage extrait de la serre (20) et chargé en humidité au moyen d'un échangeur air/liquide (11),
- récupérer des calories contenues dans l'eau traitée issue de la station d'épuration, soit via un échangeur eau/liquide (19), soit directement, après filtrage de cette eau.
- utiliser les calories ainsi récupérées pour produire un liquide chaud, utiliser le liquide chaud ainsi produit pour chauffer la boue de la serre (20).

2. Procédé selon la revendication 1, dans lequel le chauffage de la boue de la serre (20) s'effectue à l'aide d'un échangeur à liquide (8) utilisant ledit liquide chaud, et qui est inséré dans une dalle de la serre (20).

3. Procédé selon la revendication 2, dans lequel une pompe à chaleur (102) permet de fournir du liquide chaud à l'échangeur à liquide (8), en utilisant les calories de l'eau traitée récupérées directement ou via l'échangeur eau/liquide (19) .

4. Procédé selon la des revendication 2 ou 3, dans lequel on régule les calories introduites dans l'échangeur à liquide (8) en fonction de la température des déchets.

5. Procédé selon l'une des revendications 1 à 4, dans lequel ledit liquide chaud est utilisé dans un échangeur air/liquide (6) pour préchauffer l'air entrant dans la serre (20) .

6. Procédé selon la revendication 5, dans lequel on préchauffe l'air entrant lorsque l'hygrométrie relative de l'air extrait de la serre (20) au débit de ventilation maximal atteint une valeur limite, et de préférence dans lequel on régule le préchauffage de l'air entrant dans la serre (20) en fonction de la température d'air entrant dans la serre (20).

7. Procédé selon la revendication 5 ou 6, dans lequel une pompe à chaleur (101) permet de préchauffer l'air entrant dans la serre (20) en utilisant les calories récupérées dans l'air extrait de la serre par l'échangeur air/liquide.

8. Procédé selon l'une des revendications précédentes, dans lequel on produit du liquide chaud au moyen d'une même pompe à chaleur, à partir des calories récupérées dans l'air extrait de la serre (20) au niveau de l'échangeur air/liquide (11), et des calories récupérées dans l'eau traitée, soit directement, soit via l'échangeur eau/liquide (19).

9. Procédé selon l'une des revendications précédentes, comportant une étape de recirculation de l'air de balayage extrait de la serre (20).

10. Procédé selon la revendication 9, dans lequel on déshumidifie l'air extrait de la serre (20), l'air déshumidifié étant réintroduit dans la serre avec un apport d'air extérieur en fonction de l'hygrométrie relative de l'air entrant dans la serre (20).

11. Procédé selon l'une des revendications précédentes, comprenant une étape de récupération des calories issues de réactions biologiques par mélange des déchets à sécher avec une fraction de déchets secs.

12. Procédé selon l'une des revendications précédentes, comprenant une étape de récupération de l'énergie géothermique, par le biais de capteurs enterrés dans le sol.

13. Procédé selon l'une des revendications précédentes dans lequel on régule le débit d'air de balayage en fonction de l'hygrométrie et de la température de l'air extrait de la serre (20).

14. Procédé selon l'une des revendications précédentes, dans lequel l'air de balayage extrait de la serre (20) circule à travers un dispositif de lavage (80) de l'air avant d'être réintroduit dans la serre (20).

15. Procédé selon la revendication 14, dans lequel le dispositif de lavage (80) met en contact l'air de balayage et une solution de lavage liquide, notamment une solution aqueuse, permettant aux gaz polluants de se dissoudre dans la solution de lavage.

16. Procédé selon la revendication 14 ou 15, dans lequel la solution de lavage, après passage dans le dispositif de lavage (80), circule au travers d'un échangeur liquide/liquide (84) pour en récupérer des calories avant d'être réintroduite en totalité ou en partie dans le dispositif de lavage (80).

17. Procédé selon l'une des revendications précédentes, dans lequel la boue de la serre (20) est contenue entre deux murets parallèles (70, 72), chacun des deux murets (70, 72) comportant des fenêtres de ventilation (74) situées au dessus du niveau de la boue, et permettant d'assurer sur un des murets (70) l'introduction de l'air de balayage, et sur le muret (72) opposé l'extraction de cet air.

18. Procédé selon la revendication 17, dans lequel les fenêtres (74) sont disposées de manière à ce qu'aucune fenêtre ne soit en regard d'une autre, pour assurer une répartition optimale de l'air de balayage.

19. Procédé selon l'une des revendications précédentes, dans lequel on utilise comme air de balayage de la serre (20) l'air chaud provenant du refroidissement du local de surpression de la station d'épuration, en totalité ou en complément de l'air ambiant ou de l'air extrait de la serre préchauffé.

20. Installation de séchage combiné de boues ou déchets comportant :
- une dalle (27, 30), notamment drainante, sur laquelle sont épandus les boues ou déchets à sécher,
- une serre (20),
- des moyens aérauliques (9, 10, 13, 14, 15) permettant l'introduction et l'extraction de l'air sous la serre (20) de manière à évacuer la vapeur d'eau, à apporter des calories complémentaires et à éviter la stratification thermique sans ajout de moyens mécaniques dédiés,
- un échangeur air/liquide (11) pour récupérer des calories de l'air de balayage extrait de la serre,
- des moyens pour récupérer des calories contenues dans l'eau traitée issue d'une station d'épuration, soit directement après un filtrage, soit via un échangeur eau/liquide (19), et
- au moins une pompe à chaleur pour transférer les calories récupérées vers la serre.

21. Installation selon la revendication 20, comportant une pompe à chaleur (101) permettant de préchauffer l'air entrant dans la serre (20) au moyen des calories récupérées par l'échangeur air/liquide (11), la pompe à chaleur transférant ces calories vers un échangeur liquide/air (6).

22. installation selon la revendication 20 ou 21, comportant une pompe à chaleur (102) permettant de transférer les calories récupérées dans l'eau traitée, soit directement, soit via l'échangeur eau/liquide (19) vers les déchets au moyen d'un échangeur à liquide (8) inséré sous la dalle de la serre.

23. Installation selon la revendication 20, dans laquelle une même pompe à chaleur transfère les calories récupérées au niveau de l'échangeur air/liquide (11) et de l'eau traitée, d'une part, au moyen d'un échangeur à liquide (8) inséré dans la dalle de la serre, et, d'autre part, vers un échangeur air/liquide (6) pour préchauffer l'air entrant dans la serre.

24. Installation selon l'une des revendications 20 à 23, comportant un outil automatisé de retournement de la boue (32) destiné à assurer les fonctions de retournement, avancement, aération et structuration des déchets.

25. Installation selon la revendication 24, dans laquelle l'outil automatisé de retournement de la boue (32) est tel que son déplacement est longitudinal en aller retour sur une dalle (30), en ce qu'il est monté sur quatre roues (29), en ce qu'il comporte un rotor relevable (33) à palettes (34) muni d'un système mécanique à vérin d'immersion dans les déchets, destiné à assurer:
- un retournement des déchets,
- une aération des déchets,
- un avancement des déchets,
- une structuration des déchets.

26. Installation selon l'une des revendications 20 à 25, comportant un système de chargement et de déchargement automatique de la boue.

27. Installation selon l'une des revendications 20 à 26, comportant une unité de traitement des odeurs.

28. Installation selon l'une des revendications 20 à 27, dans laquelle la serre (20) est une serre basse à plafond télescopique.

29. Installation selon l'une des revendications 20 à 28, comportant un dispositif de lavage (80) de l'air de balayage extrait de la serre, l'air de balayage circulant à travers ce dispositif avant d'être réintroduit dans la serre (20) .

30. Installation selon la revendication 29, dans laquelle le dispositif de lavage (80) met en contact l'air de balayage et une solution de lavage liquide, notamment une solution aqueuse, permettant aux gaz polluants de se dissoudre dans la solution de lavage.

31. Installation selon la revendication 30, dans laquelle la solution de lavage est recyclée vers le dispositif de lavage (80), l'installation étant pourvue d'un échangeur liquide/liquide (84) pour récupérer des calories de la solution de lavage avant que celle-ci soit réintroduite, en totalité ou en partie, dans le dispositif de lavage.

32. Installation selon l'une des revendications 20 à 31, dans laquelle la boue de la serre (20) est contenue entre deux murets parallèles (70, 72), chacun des deux murets (70, 72) comportant des fenêtres (74) de ventilation situées au dessus du niveau de la boue, et permettant d'assurer sur un des murets (70) l'introduction de l'air de balayage, et sur le muret (72) opposé l'extraction de cet air.

33. Installation selon la revendication 32, dans lequel les fenêtres (74) sont disposées de manière à ce qu'aucune fenêtre ne soit en regard d'une autre, pour assurer une répartition optimale de l'air de balayage.

34. Installation selon l'une des revendications 20 à 33, dans laquelle on utilise ,comme air de balayage de la serre (20), l'air chaud provenant du refroidissement du local de surpression de la station d'épuration, en totalité ou en complément de l'air ambiant ou de l'air extrait de la serre préchauffé.
